# EUROPEAN PATENT SPECIFICATION

(11) **EP 3 861 030 B1**
(45) Date of publication and mention of the grant of the patent: **23.04.2025**
(21) Application number: 19769160.3
(22) Date of filing: 17.09.2019
(51) Int. Cl.: C08F 4/02, C08F 4/651, C08F 4/654, C08F 10/00, B01J 32/00

(54) **PRECURSORS AND CATALYST COMPONENTS FOR THE POLYMERIZATION OF OLEFINS**
VORLÄUFER UND KATALYSATORKOMPONENTEN FÜR DIE POLYMERISATION VON OLEFINEN
PRÉCURSEURS ET COMPOSANTS DE CATALYSEURS POUR LA POLYMÉRISATION D'OLÉFINES

(30) Priority: 01.10.2018 EP 18197881
(43) Date of publication of application: 11.08.2021
(73) Proprietor: Basell Poliolefine Italia S.r.l., 20121 Milano (IT)
(72) Inventor: BRITA, Diego, 44122 Ferrara (IT)
(74) Representative: LyondellBasell
(86) International application number: PCT/EP2019/074766
(87) International publication number: WO 2020/069847

(56) References cited:
- WO-A1-2018/210665
- WO-A1-2019/052900
- US-A1- 2011 183 097
- US-B2- 7 759 445

## Description

### FIELD OF THE INVENTION

The present disclosure relates to Ziegler-Natta catalyst component precursors and the methods for the preparation thereof. The said precursors have improved flowability and are used for the preparation of ZN catalyst components for the polymerization of olefins.

### BACKGROUND OF THE INVENTION

Ziegler-Natta catalyst components may be used for the stereospecific polymerization of olefins, such as propylene. The catalyst preparation may involve the use of a precursor to be reacted with a titanium compound and optionally with an internal electron donor compound.

The precursor, may comprise adducts of formula MgCl₂(R¹OH)ₙ where R¹ is a C₁-C₈ alkyl group, in particular ethyl, and n is from 2 to 6. Their specific particle size from about 5 to about 100 µm. Due to their intrinsic nature, the adduct particles may be subject to cohesiveness problems that worsen flowability and decrease the homogeneous distribution of the precursor particles during catalyst preparation.

In order to address these issues, use of slip agents such as stearates or erucamide is suggested in the art. However, these additives have not improved the flowability features of the precursor particles. U.S. Pat. App. Pub. No. 2015/0344667 suggests coating the catalyst or carrier particles with a layer of nanoparticles made of conductive material, such as carbon black. However, this process is burdensome because an additional, separate step for the preparation of a gel comprising the nanoparticles must be performed. Moreover, the presence of an additional layer may prevent the necessary interaction between the catalytically active metal(s) and the carriers. Additionally, the procedure, which comprises the use of a water-based nanoparticles gel, can subsequently inactivate the Ti based catalyst.

EP 1666505 A1 describes a catalyst preparation route in which the final catalyst component is precipitated from a reaction mixture including several ingredients. When silica is one of the ingredients the catalyst obtained shows the capability to produce polymers with a narrow particle size distribution. Nothing is described or suggested about flowability of precursors.

A simple way of improving precursor flowability without compromising its performance is therefore needed.

Surprisingly, it has been found that precursors with enhanced flowability may be obtained by mechanically mixing the MgCl₂-ROH adduct particles with low amounts of separated inorganic particles having specific composition.

### SUMMARY OF THE INVENTION

An object of the present disclosure relates to ZN catalyst component precursor comprising a dry mechanical mixture of: (a) distinct particles of adducts of formula MgCl₂(R¹OH)ₙ where R¹ is a C₁-C₈ alkyl group, preferably ethyl, and n is from 0.2 to 6 having average particle size (P50a) ranging from 5 to 100 µm; and (b) from 0.2 to 5.0% by weight of distinct particles of a solid compound containing more than 50% by weight of SiO₂ units and having average particle size (P50b) such that the ratio P50b/P50a ranges from 0.4 to 1.5.

### DETAILED DESCRIPTION OF THE INVENTION

The term mechanical mixture indicates that the particles of adduct (a) are distinct and separated from those of solid compound (b). Said particles of adduct (a) and particles of compound (b) being brought in contact to each other by means of mechanical mixing.

Preferably, in the precursor of the present disclosure the solid compound (b) has average particle size (P50b) ranging from 2 to 50 µm, more preferably from 10 to 40 µm and especially ranging from 15 to 30 µm.

The values of P50a and P50b are in both cases referred to the powder samples excluding aggregates. Powder samples substantially free from aggregates can be obtained by subjecting the powder to mechanical rolling or ultrasound treatment according to the procedure set forth in the experimental section.

Preferably, the ratio P50b/P50a ranges from 0.60 to 1.50, more preferably from 0.75 to 1.50 and especially from 0.8 to 1.3.

Preferably, the amount of particles of solid compound (b) ranges from 0.5 to 5.0% more preferably from 0.75% to 4.0% and especially from 1.0 to 3.0%wt based on the total weight of mixture (a)+(b).

The adduct (a) can be suitably prepared by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP4,399,054, WO98/44009 and WO02/051544. Another useable method for the spherulization is the spray cooling described for example in USP 5,100,849 and 4,829,034.

Particularly interesting are the MgCl_{2·}(EtOH)ₘ, adducts in which m is from 0.15 to 1.5 and particle size ranging from 10 to 100 µm obtained by subjecting the adducts with a higher alcohol content to a thermal dealcoholation process carried out in nitrogen flow at temperatures comprised between 50 and 150°C until the alcohol content is reduced to the above value. A process of this type is described in EP395083.

The dealcoholation can also be carried out chemically by contacting the adduct with compounds capable to react with the alcohol groups.

The dealcoholated adducts may also be characterized by a porosity (measured by mercury method) due to pores with radius up to 1 µm ranging from 0.15 to 2.5 cm³/g preferably from 0.25 to 1.5 cm³/g.

Preferably, according to the present disclosure, adducts particles (a) have a prevailing spherical shape. In particular, they can be characterized by a sphericity factor higher than 0.60 and preferably higher than 0.70. The sphericity factor being calculated using the image analysis technique described in the characterization section of the present application.

The precursor comprising the dry mixture of distinct particles of adduct (a) and the distinct particles of solid compound (b) can be prepared with several blending methods the preferred of which comprises dry blending the two solids in a suitable apparatus. Preferably, the dry blending is carried out at room temperature for a time ranging from 0.2 to 20 hours, preferably from 0.5 to 15 hours and more preferably from 0.5 to 5 hours in a nitrogen environment.

It is also possible preparing the dry precursor by stirring a liquid hydrocarbon slurry of the particles (a) and (b) and afterwards removing the liquid phase followed by drying the particles.

As it can be seen from the examples, the so obtained precursors show a reduced break and avalanche energy with respect to the adduct particles (a) as such. The improvement is particularly pronounced in combination with the use of the ratio P50b/P50a is 0.8 or higher. The break and avalanche energy are properties inversely related to the powder flowability. Lower values for these properties indicate higher flowability. Precursors with improved flowability allow an easier transfer and dosing of powder in the stage of solid catalyst component preparation. In general, the precursors show percentage of improvement in term of break energy of 10% or higher, preferably 20% or higher and especially higher than 30% with respect to the particles of adducts (a) as such. Moreover, the precursors show percentage of improvement in term of avalanche energy of 25% or higher, preferably 50% or higher and especially higher than 60% with respect to the particles of adducts (a) as such. The sum of percentage of improvement in terms of break and avalanche energy is higher than 35%, preferably higher than 60% and especially higher than 80%.

The so obtained precursors can then be used to prepare solid catalyst components. According to a preferred method, the solid catalyst component can be prepared by reacting a titanium compound of formula Ti(OR²)_{m-y}X_{y}, where m is the valence of titanium and y is a number between 1 and m and R² is a C1-C10 alkyl group, with the solid mixtures of the present disclosure. The Ti compound is preferably TiCl₄. The reaction with the Ti compound can be carried out by suspending the solid mixtures in cold TiCl₄ (about 0°C); the mixture is heated up to 80-130°C and kept at this temperature for 0.5-2 hours. The treatment with TiCl₄ can be carried out one or more times. The electron donor compound is preferably added during the treatment with TiCl₄. The preparation of catalyst components in spherical form are described for example in European Patent Applications EP-A-395083, EP-A-553805, EP-A-553806, EPA601525 and WIPO Pat. App. Pub. No. WO98/44009.

When prepared according to this method, the solid catalyst component may comprise from 8 to 30% more preferably from 10 to 25%wt of Mg based on the total weight of solid catalyst component. Preferably, the amount of Ti ranges from 0.1 to 8%, more preferably from 0.5 to 5% and even more preferably from 0.7 to 3%wt based on the total weight of the solid catalyst component.

In a preferred aspect of the present disclosure the so obtained catalyst components further comprise an electron donor compound (internal donor). Preferably, it is selected from esters, ethers, amines, silanes, carbamates and ketones or mixtures thereof.

The internal donor is preferably selected from the group consisting of alkyl and aryl esters of optionally substituted aromatic mono or polycarboxylic acids such as for example esters of benzoic and phthalic acids, and esters of aliphatic acids selected from malonic, glutaric, maleic and succinic acids. Specific examples of such esters are n-butylphthalate, di-isobutylphthalate, di-n-octylphthalate, ethyl-benzoate and p-ethoxy ethyl-benzoate. Also, the diesters disclosed in WO2010/078494 and US patent 7,388,061 can be used. Among this class, particularly preferred are the 2,4-pentanediol dibenzoate derivatives and 3-methyl-5-t-butyl catechol dibenzoates. In addition, the internal donor can be selected among diol derivatives chosen among dicarbamates, monoesters monocarbamates and monoesters monocarbonates. Moreover, can be advantageously used also the 1,3 diethers of the formula: 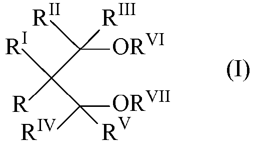 wherein R, R^{I}, R^{II}, R^{III}, R^{IV} and R^{V} equal or different to each other, are hydrogen or hydrocarbon radicals having from 1 to 18 carbon atoms, and R^{VI} and R^{VII}, equal or different from each other, have the same meaning of R-R^{V} except that they cannot be hydrogen; one or more of the R-R^{VII} groups can be linked to form a cycle. The 1,3-diethers in which R^{VI} and R^{VII} are selected from C₁-C₄ alkyl radicals are particularly preferred.
It is also possible to use mixtures of the above mentioned donors. Specific mixtures are those constituted by esters of succinic acids and 1,3 diethers as disclosed in WO2011/061134.

When it is desired to increase the capability of the catalyst to distribute an olefin comonomer within a polymer chain, such as in case of production of ethylene/α-olefin copolymers, it is preferred to choose the electron donor among monofunctional donors, in particular ethers and esters. Preferred ethers are the C₂-C₂₀ aliphatic ethers and in particulars cyclic ethers preferably having 3-5 carbon atoms cyclic ethers such as tetrahydrofurane, dioxane. Preferred esters are C₁-C₄ alkyl esters of aliphatic mono carboxylic acids such as ethylacetate and methyl formiate. Tetrahydrofurane and ethylacetate are the most preferred.

In general, the final amount of electron donor compound in the solid catalyst component may range from 0.5 to 40% by weight preferably in the range from 1 to 35% by weight.

The solid catalyst components can then be converted into catalysts for the polymerization of olefins by reacting them with organoaluminum compounds.
The organo aluminum compounds are preferably selected among alkyl-Al compound and in particular chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums. The Al/Ti ratio is higher than 1 and is preferably comprised between 50 and 2000..

The catalyst may in addition comprise an external donor which can be chosen among silicon compounds, ethers, esters, amines, heterocyclic compounds and particularly 2,2,6,6-tetramethylpiperidine and ketones. Preferably it is selected among silicon compounds of formula (R₆)ₐ(R₇)_{b}Si(OR₈)_{c}, where a and b are integers from 0 to 2, c is an integer from 1 to 4 and the sum (a+b+c) is 4; R₆, R₇, and R₈, are alkyl, cycloalkyl or aryl radicals with 1-18 carbon atoms optionally containing heteroatoms. Particularly preferred are the silicon compounds in which a is 1, b is 1, c is 2, at least one of R₆ and R₇ is selected from branched alkyl, cycloalkyl or aryl groups with 3-10 carbon atoms optionally containing heteroatoms and R₈ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, the silicon compounds in which a is 0, c is 3, R₇ is a branched alkyl or cycloalkyl group, optionally containing heteroatoms, and R₈ is methyl are also preferred. Examples of such preferred silicon compounds are cyclohexyltrimethoxysilane, t-butyltrimethoxysilane and thexyltrimethoxysilane.

The electron donor compound (iii) may be used in such an amount to give a molar ratio between the organoaluminum compound and said electron donor compound (iii) of from 0.1 to 500, preferably from 1 to 300 and more preferably from 3 to 100.
Therefore, it constitutes a further object of the present disclosure a process for the (co)polymerization of olefins CH₂=CHR, in which R is hydrogen or a hydrocarbyl radical with 1-12 carbon atoms, carried out in the presence of a catalyst comprising the product of the reaction between:
(i) the solid catalyst component of the present disclosure;
(ii) an alkylaluminum compound and,
(iii) optionally an electron-donor compound (external donor).

The polymerization process can be carried out according to various techniques, for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization may be carried out at temperature of from 20 to 120°C, preferably of from 40 to 80°C. When the polymerization is carried out in gas-phase the operating pressure is ranges from 0.5 and 5 MPa, preferably from 1 to 4 MPa. In the bulk polymerization the operating pressure is may range from 1 to 8 MPa, preferably from 1.5 to 5 MPa.

The following examples are given in order to better illustrate the subject-matter without limiting it.

### CHARACTERIZATION

### Average Particle Size

Determined by a method based on the principle of the optical diffraction of monochromatic laser light with the "Malvern Instruments 2000" apparatus. The average size is given as P50. P10 and P90 are also determined with this method.

The Malvern Mastersizer 2000 particle size analyzer is divided into three units:
1) an optical unit; Optical core unit for measurements of solids of sizes ranging from 0,02 to 2000µ, equipped with two laser beam sources: red He/Ne laser, power 5mw, wave length 633 nm., blue (diode) laser, wave length 450nm.
2) a sampling Unit; Hidro 2000S automatic Sampling Unit for volumes between 50 and 120 ml, operating with internal capacity, centrifuge pump, stirrer and ultrasound probe with 40W power output.
3) a PC console; Portable LG Pentium series, using Malvern Professional software for Windows 2000 or NT. Method of data elaboration using Mie optics theory (Refractive Index for sample =1.596; Refractive Index for n-heptane =1.39).

### Method description

For the measurements described herein n-heptane (plus 2 g/l antistatic Span 80) is used as dispersing agent.

The Measuring cell is loaded with dispersing agent, while pump/agitator speed is set up to 2205 RPM. Background measurement is then taken. Then sample is loaded, by using a dedicated loading mean for solids or slurries. A that point, before being subject to PS Determination, the sample undergoes 30 seconds of ultrasound treatment. After that, the measurement is taken.

### Determination of Break Energy and Avalanche Energy

Measurements were carried out with a Revolution Powder Analyzer (Mercury Scientific Inc., Newtown, CT, USA). Specific measurement conditions are provided in the user manual revised on August 30, 2014.

### Determination of Sphericity Factor

The determination was carried out with the image analyzer commercial software Analysis Pro 3.2 which describes the sphericity of a particle using an algorithm applied to a source of image constituted by a SEM picture the dimension of which are selected based on the average size of the catalyst particle so as to include a statistically representative number of particles. For the catalyst sample having average particle size of 70µm the size of the picture was 2.5x2.5mm. For instance, for the catalyst sample having particle size of about 9 µm the size of the picture was 150 µm x150 µm.

### Starting MgCl₂-EtOH particles (component (a) of the solid mixture

Three different lots of microspheroidal MgCl₂·2.8C₂H₅OH were prepared according to the method described WO02/051544 having the following P50:
- Lot A 28µm.
- Lot B 34µm.
- Lot C 20µm

### Compounds (b)

The following compounds were used:
- Celite^{®} a diatomeaceous earth commercially available from Sigma-Aldrich having P50 of 22 µm;
- Silica S5631 having mean particle 0.9 µm (commercially available from Fluka);
- Gasil AB 200DF is commercialized by PQ corporation. It is an amorphous silica with P50 size of 8 µm;
- Gasil AB 735 is commercialized by PQ corporation. It is an amorphous silica with P50 size of 24µm;
- Silica H30 is commercialized by Wacker Chemie AG. It has a P50 size of 22µm;
- Silica T30 is commercialized by Wacker Chemie AG. It has a P50 size of 23µm;
- Silica T40 is commercialized by Wacker Chemie AG. It has a P50 size of 33µm;

### EXAMPLES

### Examples 1-2 and Comparative Example 1

A series of three mixtures was prepared by dry mixing the lot A of the solid adduct with the specific amount reported in Table 1 of Celite^{®}. The blending was carried out as follows. 100 grams of the solid catalyst component were introduced in a 1L glass bottle and then, the amount of Celite^{®} reported in table 1was also added.
The solids were mixed by tumbling the bottle for 1h at 60rpm. The resulting mixtures were subject to energy break and avalanche energy determination and the results are reported in Table 1.

### Examples 3-6 and Comparative Examples 2-7

The mixtures were prepared as described in Examples 1-2 with the difference that the compounds (b) reported in table 1 were used. The resulting mixtures were subject to energy break and avalanche energy determination and the results are reported in Table 1.

### Examples 7-13 and Comparative Examples C8-C10

The mixtures were prepared as described in Examples 1-2 with the difference that Examples Lot B of adduct (a) was used instead of Lot A and the SiO₂ based unit compounds reported in Table 1 were used instead of Celite^{®} The resulting mixtures were subject to energy break and avalanche energy determination and the results are reported in Table 1.

### Examples 14-24 and comparative example C11

The mixtures were prepared as described in Examples 1-2 with the difference that Lot C of adduct (a) was used instead of Lot A and the SiO₂ based unit compounds reported in Table 1 were used instead of Celite^{®} The resulting mixtures were subject to energy break and avalanche energy determination and the results are reported in Table 1.

**Table 1**

| **Ex.** | Catalyst | Additional compound | | | | | |
|---|---|---|---|---|---|---|---|
| | Lot | Type | Amount %wt. | Break Energy Kj/Kg. | % Impr. | Avalanche energy Kj/Kg. | % Impr. |
| **C1** | A | - | - | 68 | - | 32.3 | |
| **1** | " | Celite | 1 | 61 | 10 | 22 | 32 |
| **2** | " | " | 2 | 61 | 10 | 21 | 35 |
| **3** | | H30 | 0.5 | 45 | 34 | 15 | 54 |
| **4** | | " | 0.75 | 45.5 | 33 | 11 | 66 |
| **5** | " | " | 1 | 48 | 29 | 11 | 66 |
| **6** | " | | 2 | 54 | 21 | 10 | 69 |
| **C2** | " | S5631 | 0.5 | 76 | -12 | 37 | -15 |
| **C3** | " | | 1 | 89 | -31 | 38 | -18 |
| **C4** | " | | 2 | 64 | 6 | 25 | 22 |
| **C5** | " | Ca Stearate | 3 | 69 | -1 | 31 | 4 |
| **C6** | " | Erucamide | 2 | 68 | 0 | 33 | -2 |
| **C7** | | Mg Stearate | 3 | 71 | -4 | 29 | 10 |
| | | | | | | | |
| **C8** | B | - | | 74 | - | 40 | - |
| **7** | B | T30 | 1 | 46 | 38 | 20 | 50 |
| **8** | " | HDK T40 | 1 | 54 | 27 | 19 | 53 |
| **9** | " | " | 2 | 52 | 30 | 19 | 53 |
| **10** | " | " | 3 | 39 | 47 | 11 | 73 |
| **11** | **"** | Gasil AB735 | 1 | 58 | 22 | 15 | 63 |
| **12** | **"** | " | 2 | 58 | 22 | 8.3 | 79 |
| **13** | **"** | " | 3 | 51 | 31 | 8 | 80 |
| **C9** | **"** | Gasil AB200DF | 1 | 73 | 1 | 36 | 10 |
| **C10** | **"** | " | 2 | 69 | 7 | 32 | 20 |
| **C11** | C | - | - | 91.2 | - | 57.0 | - |
| **14** | " | HDK T30 | 1 | 68.6 | 25 | 42 | 26 |
| **15** | " | " | 2 | 57.0 | 38 | 27 | 53 |
| **16** | " | " | 3 | 55.2 | 39 | 19 | 67 |
| **17** | " | HDK H30 | 1 | 57.1 | 37 | 19.4 | 66 |
| **18** | " | " | 2 | 56.1 | 38 | 12.8 | 78 |
| **19** | " | " | 3 | 67.8 | 26 | 11.2 | 80 |
| **20** | " | Gasil AB200DF " | 2 | 64 | 30 | 40 | 30 |
| **21** | " | " | 3 | 57 | 38 | 23 | 60 |
| **22** | " | Gasil AB735 | 1 | 55 | 40 | 15 | 74 |
| **23** | " | | 2 | 43 | 53 | 19 | 84 |
| **24** | " | | 3 | 45 | 51 | 10 | 82 |
| | | | | | | | |
| | | | | | | | |

## Claims

1. A Ziegler-Natta catalyst component precursor comprising a dry mechanical mixture of (a) distinct particles of adducts of formula MgCl₂(R¹OH)ₙ where R¹ is a C₁-C₈ alkyl group, and n is from 0.2 to 6 having average particle size (P50a) ranging from 5 to 100 µm as determined according to the description and (b) from 0.2 to 5.0% by weight, based on the total amount of (a)+(b), of distinct particles of a solid compound containing more than 50% by weight of SiO₂ units and having average particle size (P50b) such that the ratio P50b/P50a ranges from 0.4 to 1.5.

2. The mixture of claim 1 wherein the solid compound (b) containing more than 50% by weight of SiO₂ units is selected from silica, silicates and diatomaceous earth and mixtures thereof.

3. The mixture of claim 2 wherein the solid compound (b) containing more than 50% by weight of SiO₂ units is selected from silica.

4. The mixture of claim 1 wherein the average particle size of the adduct (a) expressed as (P50a) ranges from 10 to 100 µm.

5. The mixture of claim 4 wherein the average particle size of the adduct (a) expressed as (P50a) ranges from 15 to 80 µm.

6. The mixture of claim 1 wherein the ratio P50b/P50a ranges from 0.60 to 1.50.

7. The mixture of claim 6 wherein the P50b/P50a ranges from 0.75 to 1.50.

8. The mixture of claim 1 wherein the amount of particles of solid compound (b) ranges from 0.5 to 5.0% based on the total of (a)+(b).

9. The mixture of claim 8 wherein the amount of particles of solid compound (b) ranges from 0.75 to 4.0% based on the total of (a)+(b).

10. The mixture of claim 9 wherein the amount of particles of solid compound (b) ranges from 1.0 to 3.0% based on the total of (a)+(b).

11. The mixture of claim 1 wherein the particle size of the solid compound (b) ranges from 2 to 50 µm.

12. The catalyst mixture of claim 11 wherein the particle size of the solid compound (b) ranges from 10 to 40 µm.

13. A solid catalyst component for the polymerization of olefins obtained by reacting a titanium compound of formula Ti(OR²)_{m-y}X_{y}, where m is the valence of titanium and y is a number between 1 and m and R² is a C₁-C₁₀ alkyl group, with the solid mixtures according to claim 1.

14. The solid catalyst component of claim 13 further comprising an internal donor selected from esters, ethers, amines, silanes, carbamates and ketones or mixtures thereof.

15. A catalyst system for the (co)polymerization of olefins CH₂=CHR, in which R is hydrogen or a hydrocarbyl radical with 1-12 carbon atoms, comprising the product obtained by contacting:
(i) the solid catalyst component according to claim 13;
(ii) an alkylaluminum compound and,
(iii)optionally an external electron donor compound.

## Patentansprüche

1. Vorläufer für eine Ziegler-Natta-Katalysatorkomponente, umfassend eine trockene mechanische Mischung aus (a) eigenständigen Partikeln von Addukten mit der Formel MgCl₂(R¹OH)ₙ, wobei R¹ eine C₁- bis C₈-Alkylgruppe ist, und n 0,2 bis 6 ist, mit einer durchschnittlichen Partikelgröße (P50a) im Bereich von 5 bis 100 µm, bestimmt gemäß der Beschreibung, und (b) 0,2 bis 5,0 Gew.%, bezogen auf die Gesamtmenge von (a)+(b), an eigenständigen Partikeln einer festen Komponente, die mehr als 50 Gew.% SiO₂-Einheiten enthält und eine durchschnittliche Partikelgröße (P50b) hat, so dass das Verhältnis P50b/P50a im Bereich von 0,4 bis 1,5 liegt.

2. Mischung nach Anspruch 1, wobei die feste Verbindung (b), die mehr als 50 Gew.% SiO₂-Einheiten enthält, ausgewählt ist aus Silika, Silikaten und Kieselerde sowie Mischungen davon.

3. Mischung nach Anspruch 2, wobei die feste Verbindung (b), die mehr als 50 Gew.% SiO₂-Einheiten enthält, ausgewählt ist aus Silika.

4. Mischung nach Anspruch 1, wobei die durchschnittliche Partikelgröße des Addukts (a), ausgedrückt als (P50a), im Bereich von 10 bis 100 µm liegt.

5. Mischung nach Anspruch 4, wobei die durchschnittliche Partikelgröße des Addukts (a), ausgedrückt als (P50a), im Bereich von 15 bis 80 µm liegt.

6. Mischung nach Anspruch 1, wobei das Verhältnis P50b/P50a im Bereich von 0,60 bis 1,50 liegt.

7. Mischung nach Anspruch 6, wobei das Verhältnis von P50b/P50a im Bereich von 0,75 bis 1,50 liegt.

8. Mischung nach Anspruch 1, wobei die Menge an Partikeln der festen Verbindung (b) im Bereich von 0,5 bis 5,0 % liegt, bezogen auf die Summe von (a)+(b).

9. Mischung nach Anspruch 8, wobei die Menge an Partikeln der festen Verbindung (b) im Bereich von 0,75 bis 4,0 % liegt, bezogen auf die Summe von (a)+(b).

10. Mischung nach Anspruch 9, wobei die Menge an Partikeln der festen Verbindung (b) im Bereich von 1,0 bis 3,0 % liegt, bezogen auf die Summe von (a)+(b).

11. Mischung nach Anspruch 1, wobei die Partikelgröße der festen Komponente (b) im Bereich von 2 bis 50 µm liegt.

12. Katalysatormischung nach Anspruch 11, wobei die Partikelgröße der festen Komponente (b) im Bereich von 10 bis 40 µm liegt.

13. Feste Katalysatorkomponente zur Polymerisation von Olefinen, die durch Umsetzen einer Titanverbindung mit der Formel Ti(OR²)_{m-y}X_{y}, wobei m die Wertigkeit von Titan ist, und y eine Zahl zwischen 1 und m ist, und R² eine C₁- bis C₁₀-Alkylgruppe ist, mit den festen Mischungen gemäß Anspruch 1 erhalten wird.

14. Feste Katalysatorkomponente nach Anspruch 13, des Weiteren umfassend einen internen Donor ausgewählt ist aus Estern, Ethern, Aminen, Silanen, Carbamaten und Ketonen oder Mischungen davon.

15. Katalysatorsystem zur (Co)polymerisation von Olefinen CH₂=CHR, wobei R Wasserstoff oder ein Kohlenwasserstoffrest mit 1 bis 12 Kohlenstoffatomen ist, umfassend das Produkt, das erhalten wird durch Kontaktieren von:
(i) der festen Katalysatorkomponente nach Anspruch 13;
(ii) einer Alkylaluminiumverbindung und
(iii)gegebenenfalls einer externen Elektronendonorverbindung.

## Revendications

1. Précurseur de constituant catalytique Ziegler-Natta, comprenant un mélange mécanique sec de (a) particules distinctes de produits d'addition de formule MgCl₂(R¹OH)ₙ, où R¹ représente un groupe alkyle en C₁-C₈ et n vaut 0,2 à 6, présentant une grosseur moyenne de particule (P50a) située dans la plage de 5 à 100 µm, telle que déterminée selon la description, et (b) de 0,2 à 5,0 % en poids, sur la base de la quantité totale de (a)+(b), de particules distinctes d'un composé solide contenant plus de 50 % en poids de motifs de SiO₂ et présentant une grosseur moyenne de particule (P50b) telle que le rapport P50b/P50a est situé dans la plage de 0,4 à 1,5.

2. Mélange selon la revendication 1, le composé solide (b) contenant plus de 50 % en poids de motifs de SiO₂ étant choisi parmi la silice, les silicates et la terre de diatomées et leurs mélanges.

3. Mélange selon la revendication 2, le composé solide (b) contenant plus de 50 % en poids de motifs de SiO₂ étant choisi parmi la silice.

4. Mélange selon la revendication 1, la grosseur moyenne de particule du produit d'addition (a) exprimée sous la forme de (P50a) étant située dans la plage de 10 à 100 µm.

5. Mélange selon la revendication 4, la grosseur moyenne de particule du produit d'addition (a) exprimée sous la forme de (P50a) étant située dans la plage de 15 à 80 µm.

6. Mélange selon la revendication 1, le rapport P50b/P50a étant situé dans la plage de 0,60 à 1,50.

7. Mélange selon la revendication 6, P50b/P50a étant situé dans la plage de 0,75 à 1,50.

8. Mélange selon la revendication 1, la quantité de particules de composé solide (b) étant située dans la plage de 0,5 à 5,0 % sur la base du total de (a)+(b).

9. Mélange selon la revendication 8, la quantité de particules de composé solide (b) étant située dans la plage de 0,75 à 4,0 % sur la base du total de (a)+(b).

10. Mélange selon la revendication 9, la quantité de particules de composé solide (b) étant située dans la plage de 1,0 à 3,0 % sur la base du total de (a)+(b).

11. Mélange selon la revendication 1, la grosseur de particule du composé solide (b) étant située dans la plage de 2 à 50 µm.

12. Mélange catalytique selon la revendication 11, la grosseur de particule du composé solide (b) étant située dans la plage de 10 à 40 µm.

13. Constituant catalytique solide destiné à la polymérisation d'oléfines obtenu par réaction d'un composé de titane de formule Ti(OR²)_{m-y}X_{y}, où m représente la valence du titane et y représente un nombre situé entre 1 et m et R² représente un groupe alkyle en C₁-C₁₀, avec les mélanges solides selon la revendication 1.

14. Constituant catalytique solide selon la revendication 13, comprenant en outre un donneur interne choisi parmi les esters, les éthers, les amines, les silanes, les carbamates et les cétones ou leurs mélanges.

15. Système catalytique destiné à la (co)polymérisation d'oléfines CH₂=CHR, dans lesquelles R représente hydrogène ou un radical hydrocarbyle comprenant 1 à 12 atomes de carbone, comprenant le produit obtenu par mise en contact :
(i) du constituant catalytique solide selon la revendication 13 ;
(ii) d'un composé d'alkylaluminium et
(iii)éventuellement d'un composé donneur d'électrons externe.
